# EUROPÄISCHE PATENTSCHRIFT

(11) **EP 2 062 761 B1**
(45) Veröffentlichungstag und Bekanntmachung des Hinweises auf die Patenterteilung: **16.02.2011**
(21) Anmeldenummer: 08020504.0
(22) Anmeldetag: 26.11.2008
(51) Int. Cl.: B60H 1/00

(54) **Klimaanlage für ein Kraftfahrzeug**
Air conditioning unit for a motor vehicle
Dispositif de climatisation de véhicule automobile

(30) Priorität: 26.11.2007 DE 102007057168
(43) Veröffentlichungstag der Anmeldung: 27.05.2009
(73) Patentinhaber: Behr GmbH & Co. KG, 70469 Stuttgart (DE)
(72) Erfinder: Wolf, Walter, 71570 Oppenweiler-Zell (DE)
(74) Vertreter: Grauel, Andreas

(56) Entgegenhaltungen:
- EP-A- 1 122 103
- DE-U1- 9 420 291
- FR-A- 2 761 013
- FR-A- 2 769 694
- US-A- 5 954 578

## Beschreibung

Die Erfindung betrifft eine Klimaanlage für ein Kraftfahrzeug, umfassend ein von einem linken und rechten Gehäuseteil wenigstens teilweise gebildetes Gehäuse zur Aufnahme eines Kältemittelverdampfers, wobei zwischen dem linken und rechten Gehäuseteil eine Trennfuge auftritt, einen im Gehäuse angeordneten Kältemittelverdampfer, eine von dem Gehäuse gebildete Bodenwandung zum Sammeln des am Kältemittelverdampfer sich bildenden Kondenswassers und wenigstens eine in der Bodenwandung angeordnete Ablauföffnung zum Abführen des am Kältemittelverdampfer gebildeten Kondenswassers. Die Erfindung betrifft ferner eine Klimaanlage für ein Kraftfahrzeug, umfassend ein von einem linken und rechten Gehäuseteil wenigstens teilweise gebildetes Gehäuse zur Aufnahme eines Kältemttelverdampfers, wobei zwischen dem linken und rechten Gehäuseteil wenigstens eine Trennfuge auftritt, ein Dichtmittel zum Abdichten der Trennfuge, einen im Gehäuse angeordneten Kältemittelverdampfer, eine Bodenwandung zum Sammeln des am Kältemittelverdampfer sich bildenden Kondenswassers und wenigstens eine in der Bodenwandung angeordnete Ablauföffnung zum Abführen des am Kältemittelverdampfer gebildeten Kondenswassers.

Bestandteil von Klimaanlagen für Kraftfahrzeuge bilden HVAC-Gehäuse aus Kunststoff mit einem Kältemittelverdampfer zum Kühlen und einer Heizeinrichtung zum Erwärmen einer in den Innenraum des Kraftfahrzeuges zu leitenden Luft. Die Gehäuse können eine Trennung in ein oberes und ein unteres Gehäuseteil oder in ein linkes und ein rechtes Gehäuseteil vorsehen, so dass das Gehäuse aus zwei Bauteilen besteht. Ferner kann auch eine Trennung in ein linkes unteres, ein rechtes unteres und ein oberes Gehäuseteil ausgebildet sein. Zwischen den Gehäuseteilen bildet sich eine Trennfuge aus. Am Kältemittelverdampfer schlägt sich Kondenswasser nieder, welches auf der Bodenwandung des Gehäuses aufgefangen und durch eine Ablauföffnung aus dem Gehäuse geleitet wird. Gehäuse mit einer Trennung nur in ein oberes und unteres Gehäuseteil verfügen im Bereich der mit Kondenswasser beaufschlagten Bodenwandung nicht über eine Trennfuge, so dass an der Trennfuge keine Dichtigkeitsprobleme wegen des Kondenswassers auftreten können. In Gehäusen mit einem linken und rechten Gehäuseteil tritt an der von dem Gehäuse gebildeten Bodenwandung eine Trennfuge auf, welche abgedichtet werden muss.

Gehäuse mit einer Trennung in ein rechtes und linkes Gehäuseteil haben den Vorteil, dass diese im Allgemeinen kleiner und kompakter sind. Zum Abdichten der mit Kondenswasser beaufschlagten Bodenwandung des Gehäuses kann ein Einsatzteil im Bereich der Bodenwandung eingesetzt werden. Ferner ist es möglich, die Trennfuge im Bereich der Bodenwandung mit einer elastischen Dichtung oder mittels eines Verschweißens abzudichten. Die Maßnahmen zum Abdichten der Trennfuge sind aufwendig und kostenintensiv. Trotzdem können Undichtigkeiten, z. B. bei einem Schrumpfen der elastischen Dichtung, auftreten.

Aus der EP 1 122 103 A2 und der US 5 954 578 sind gattungsbildende Klimaanlagen bekannt. Das Gehäuse besteht aus einem linken und rechten

Gehäuseteil. Die beiden Gehäuseteile sind mittels einer Nut- und Federverbindung miteinander verbunden. Im Bereich der mit Kondenswasser beaufschlagten Bodenwandung ist in der Nut- und Federverbindung eine elastische Dichtung angeordnet. Durch eine Ablauföffnung wird das Kondenswasser aus dem Gehäuse geleitet. Nachteiligerweise können an der Nut- und Federverbindung, z. B. bei Toleranzabweichungen in der Fertigung, Undichtigkeiten auftreten und die Dichtung und deren Montage ist aufwendig und teuer.

Die Aufgabe der vorliegenden Erfindung besteht deshalb darin, bei einer Klimaanlage mit einer Trennung in ein linkes und rechtes Gehäuse eine sichere und zuverlässige Abdichtung der Trennfuge in der mit Kondenswasser beaufschlagten Bodenwandung zu ermöglichen. Die Klimaanlage soll in der Herstellung einfach und preiswert sowie auch bei Abweichungen in der Fertigungstoleranz der Gehäuseteile eine problemlose Abdichtung gewährleistet sein.

Diese Aufgabe wird gelöst mit einer Klimaanlage für ein Kraftfahrzeug nach anspruch 1.

In einer nicht beanspruchten Ausgestaltung ist die Trennfuge, vorzugsweise in vertikaler Richtung, um mehr als 0,5 cm, insbesondere um mehr als 1 cm, ausschließlich oberhalb der Ablauföffnung angeordnet.

In einer nicht beanspruchten Ausführungsform ist die Neigung der Bodenwandung in einer Richtung senkrecht zur Ebene der Trennfuge beiderseits der Trennfuge nach unten zur wenigstens einen Ablauföffnung gerichtet, insbesondere mit einer Neigung von mehr als 17°. Die Bodenwandung beiderseits der Trennfuge ist entweder einheitlich zu einer Ablauföffnung geneigt oder entgegengesetzt geneigt, d. h. als Dachprofil ausgebildet, zu je einer Ablauföffnung geneigt.

Zweckmäßig ist in einer nicht beanspruchten Ausführungsform die Trennfuge im Bereich einer maximalen Höhe der Bodenwandung angeordnet. Die Trennfuge ist somit in einem Bereich einer maximalen Höhe der Bodenwandung ausgebildet, so dass das Kondenswasser beiderseits der Trennfuge in entgegengesetzter Richtung abläuft.

In einer nicht beanspruchten Ausgestaltung ist die Trennfuge in einem nur in eine Richtung zur Ablauföffnung geneigten Bodenwandung, vorzugsweise mittig, zwischen einem Bereich einer minimalen Höhe der Bodenwandung, insbesondere mit der Ablauföffnung, und einem Bereich einer maximalen Höhe der Bodenwandung ausgebildet. Das auf der Bodenwandung auftreffende Kondenswasser läuft beiderseits der Trennfuge in die gleiche Richtung zu der Ablauföffnung ab.

In einer nicht beanspruchten Ausgestaltung ist die Trennfuge von einer Dichtrippe und/oder einem Klemmprofil überdeckt. Damit kann das Kondenswasser nicht von oben unmittelbar auf der Trennfuge auftreffen, so dass ein kurzzeitiger Wasserdruck an der Trennfuge, verursacht durch einen direkt auf der Trennfuge auftreffenden Kondenswassertropfen, nicht auftreten kann.

In einer nicht beanspruchten Ausgestaltung ist die Dichtrippe an einem Gehäuseteil fixiert.

In einer nicht beanspruchten Ausgestaltung ist die Dichtrippe einstückig mit dem einen Gehäusesteil ausgebildet. Die Dichtrippe kann damit beispielsweise einfach beim Spritzgießen des Gehäuseteils an der Bodenwandung hergestellt werden. Die Dichtrippe besteht damit aus demselben Material wie das Gehäuse.

In einer nicht beanspruchten Ausgestaltung besteht die Dichtrippe bevorzugt aus einem elastomeren Material und ist insbesondere mittel der Technik des Zwei-Komponenten Spritzgusses einstückig mit dem Gehäuse hergestellt.

In einer nicht beanspruchten Ausgestaltung erstreckt sich die Dichtrippe von einem höher liegenden Abschnitt der Bodenwandung zu einem tiefer liegenden Abschnitt der Bodenwandung und die Dichtrippe ist einstückig mit dem höher liegenden Abschnitt der Bodenwandung ausgebildet. Das Kondenswasser läuft somit vom höher liegenden Abschnitt der Bodenwandung über die Dichtrippe zum tiefer liegenden Abschnitt der Bodenwandung.

In einer nicht beanspruchten Ausgestaltung ein Ende der Dichtrippe als Tropfnase ausgebildet und die Tropfnase überdeckt die Trennfuge in einem Abstand. Die Tropfnase bewirkt, dass Kondenswassertropfen kontrolliert in einem Abstand von der Trennfuge auf die Bodenwandung fallen.

In einer nicht beanspruchten Ausgestaltung ist ein zwischen Dichtrippe und Bodenwandung gebildeter Hohlraum von einer an einem anderen Gehäuseteil fixierten zusätzlichen

Dichtrippe ausgefüllt. Die Trennfuge wird dadurch vergrößert, so dass dem Kondenswasser ein größerer Strömungswiderstand zum Durchfließen der Trennfuge entgegensteht.

In einer nicht beanspruchten Ausgestaltung ist die zusätzliche Dichtrippe einstückig mit dem anderen Gehäuseteil ausgebildet.

In einer nicht beanspruchten Ausführungsform sind beide Dichtrippen von einem Schrumpfschlauch oder einer Schrumpffolie oder einem Klemmprofil umschlossen. Der Schrumpfschlauch oder die Schrumpffolie dichten damit die Trennfuge zusätzlich ab. Das Klemmprofil drückt beide Dichtrippen gegeneinander und/oder dichtet die Trennfuge zusätzlich ab.

In einer nicht beanspruchten Ausführungsform ist die Trennfuge von einer Nut- und Federverbindung gebildet. Die Nut- und Federverbindung ermöglicht eine formschlüssige Verbindung zwischen den beiden Gehäuseteilen.

In einer nicht beanspruchten Ausgestaltung ist an einer nicht mit Kondenswasser beaufschlagten Unterseite der Bodenwandung an der Trennfuge bei jedem der Gehäuseteile eine vorstehende Dichtlippe ausgebildet, welche von einem Schrumpfschlauch oder einer Schrumpffolie oder einem Klemmprofil umschlossen sind. Der Schrumpfschlauch oder die Schrumpffolie oder das Klemmprofil dichten damit die Trennfuge an der Unterseite zusätzlich ab. Das Klemmprofil drückt vorzugsweise beide vorstehende Dichtlippen aneinander.

In einer nicht beanspruchten Ausführungsform ist die Nut- und Federverbindung wenigstens teilweise in der Dichtlippe angeordnet.

In einer nicht beanspruchten Ausgestaltung wird von dem Klemmprofil und/oder einem Schrumpfschlauch oder einer Schrumpffolie eine Notablaufrinne eingeschlossen. Vorzugsweise ist Kondenswasser von der Notablaufrinne in einen Kondenswasserablauf leitbar. Beispielsweise ist die Notablaufrinne von einer länglichen Ausnehmung in einer Dichtlippe gebildet. Die Notablaufrinne ist bevorzugt an der Unterseite der Bodenwandung ausgebildet.

In einer nicht beanspruchten Ausfürungsform drückt das elastische Klemmprofil das linke und rechte Gehäuseteil an der Trennfuge gegeneinander, beispielsweise indem das Klemmprofil die Dichtrippe und die Zusatzrippe oder beide Dichtlippen umschließt.

In einer nicht beanspruchten ist zwischen dem linken und rechten Gehäuseteil wenigstens teilweise das elastische Klemmprofil angeordnet, so dass das Klemmprofil die Trennfuge abdichtet.

In einer nicht beanspruchten Ausfürungsform ist die wenigstens eine Ablauföffnung ein einem Tiefpunkt der Bodenwandung ausgebildet.

Eine erfindungsgemäße Klimaanlage für ein Kraftfahrzeug umfasst ein von einem linken und rechten Gehäuseteil wenigstens teilweise gebildetes Gehäuse zur Aufnahme eines Kältemittelverdampfers, wobei zwischen dem linken und rechten Gehäuseteil wenigstens eine Trennfuge auftritt, ein Dichtmittel zum Abdichten der wenigstens einen Trennfuge, einen im Gehäuse angeordneten Kältemittelverdampfer, eine von dem Gehäuse gebildete Bodenwandung zum Sammeln des am Kältemittelverdampfer sich bildenden Kondenswassers und wenigstens eine in der Bodenwandung angeordnete Ablauföffnung zum Abführen des am Kältemittelverdampfer gebildeten Kondenswassers, wobei die vom linken und rechten Gehäuseteil gebildete Bodenwandung mittels dem Dichtmittel, insbesondere an der wenigstens einen Trennfuge, ausschließlich mittelbar miteinander verbunden ist oder keine unmittelbare Verbindung, vorzugsweise an der wenigstens einen Trennfuge, zwischen der vom linken und rechten Gehäuseteil gebildeten Bodenwandung besteht.

Insbesondere bildet das Dichtmittel die Ablauföffnung.

In einer weiteren Ausgestaltung bildet das Dichtmittel, vorzugsweise einteilig, einen Anschlussstutzen. Damit ist kein zusätzlicher Anschlussstutzen erforderlich und der Anschlussstutzen kann einfach elastisch ausgeführt werden.

In einer zusätzlichen Ausgestaltung ist die wenigstens eine Trennfuge von einer Nut- und Federverbindung gebildet.

In einer weiteren Ausgestaltung ist im Gehäuse eine Heizeinrichtung und/oder ein Filter und/oder eine elektrische Nachheizung und/oder eine Prallwand und/oder wenigstens eine Luftklappe und/oder ein Gebläse angeordnet.

Insbesondere ist das Dichtmittel ein elastisches Dichtelement.

Im Nachfolgenden wird die Erfindung unter Bezugnahme auf die beigefügten Zeichnungen näher beschrieben. Es zeigt:
Fig. 1 einen nicht beanspruchten Querschnitt eines Gehäuses für eine Kraftfahrzeugklimaanlage
Fig. 2 einen nicht beanspruchten Querschnitt einer Bodenwandung des Gehäuses
Fig. 3 einen nicht beanspruchten Querschnitt der Bodenwandung des Gehäuses
Fig. 4 einen nicht beanspruchten Querschnitt der Bodenwandung des Gehäuses
Fig. 5 einen nicht beanspruchten Querschnitt einer Trennfuge für die Bodenwandung gemäß Fig. 2,
Fig. 6 einen nicht beanspruchten Querschnitt der Trennfuge für die Bodenwandung gemäß Fig. 3 oder 4,
Fig. 7 einen nicht beanspruchten Querschnitt der Trennfuge die Bodenwandung gemäß Fig. 3 oder 4,
Fig. 8 einen nicht beanspruchten Querschnitt der Trennfuge für die Bodenwandung gemäß Fig. 3 oder 4,
Fig. 9 eine nicht beanspruchten perspektivische Ansicht der Verbindung zwischen dem linken und rechten Gehäuseteil gemäß Fig. 8,
Fig. 10 einen nicht beanspruchten Querschnitt der Trennfuge für die Bodenwandung gemäß Fig. 3 oder 4,
Fig. 11 einen nicht beanspruchten Querschnitt der Trennfuge für die Bodenwandung gemäß Fig. 3 oder 4,
Fig. 12 einen horizontalen Schnitt durch das Gehäuse und eine Draufsicht auf die Bodenwandung des Ausführungsbeispiels,
Fig. 13 einen Querschnitt gemäß Schnitt A-A in Fig. 12,
Fig. 14 einen Querschnitt gemäß Schnitt B-B in Fig. 12,
Fig. 15 einen Querschnitt gemäß Schnitt C-C in Fig. 12 und
Fig. 16 eine vereinfachte perspektivische Ansicht eines elastischen Dichtelements des Ausführungsbeispiels.

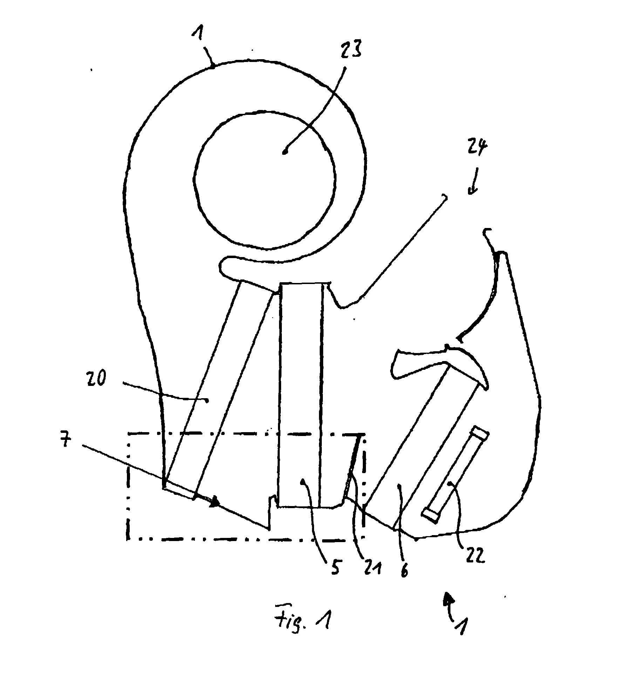

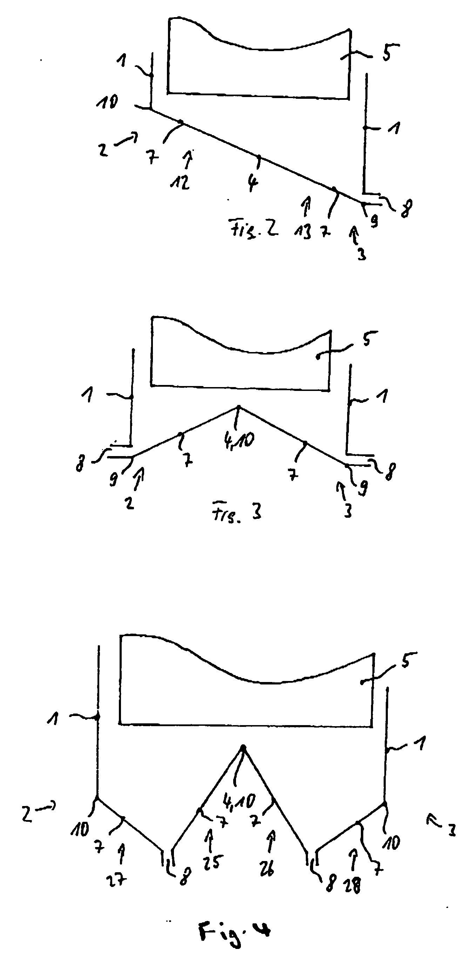

Figur 1 zeigt einen nicht beanspruchten Querschnitt eines Gehäuses 1 für eine Klimaanlage eines Kraftfahrzeuges (nicht dargestellt). Das Gehäuse 1 besteht aus einem linken Gehäuseteil 2 und einem rechten Gehäuseteil 3 (in Fig. 2, 3 und 4 teilweise dargestellt). Zwischen dem linken und rechten Gehäuseteil 2, 3 bildet sich somit eine Trennfuge 4 aus (in Fig. 1 nicht dargestellt). Die Ebene der Trennfuge 4 ist vertikal ausgerichtet. Die übrigen Bestandteile der Klimaanlage, z. B. ein Kältemittelkondensator und ein Verdichter, sind nicht dargestellt.

Das Gehäuse 1 nimmt ein Gebläse 23, einen Filter 20, einen Kältemittelverdampfer 5, eine vom Kühlwasser des Motors durchflossene Heizeinrichtung 6 und eine elektrische Nachheizung 22 auf. Die Luft für den Fahrgastraum wird vom Gebläse 23 durch den Filter 20 und den Kältemittelverdampfer 5 geleitet. Durch die Abkühlung des Luftstromes im Kältemittelverdampfer 5 schlägt sich die im Luftstrom enthaltene Feuchtigkeit am Kältemittelverdampfer 5 nieder und es bilden sich Kondenswassertropfen auf dem Kältemittelverdampfer 5. Die Kondenswassertropfen fallen ab einer bestimmten Größe aufgrund der Schwerkraft auf eine vom Gehäuse 1 gebildete Bodenwandung 7 und sammeln sich hier. Bei größeren Luftströmungsgeschwindigkeiten können auch Kondenswassertropfen vom Luftstrom in Richtung der Heizeinrichtung 6 mitgerissen werden. Eine Prallwand 21 dient dazu, die von dem Luftstrom mitgerissenen Kondenswassertropfen zurückzuhalten und in Richtung der Bodenwandung 7 zu leiten. Nicht dargestellte Luftklappen steuern den Anteil des Luftstromes, der nach dem Durchströmen des Kältemittelverdampfers 5 durch die Heizeinrichtung 6 und/oder die elektrische Nachheizung 22 geleitet wird. Die erwärmte und/oder gekühlte Luft verlässt durch eine Austrittsöffnung 24 das Gehäuse 1. Die wasserdicht auszubildende Bodenwandung 7 ist in Fig. 1 mit einem strichpunktierten Kasten eingerahmt.

In den Fig. 2 bis 4 ist ein Querschnitt der Bodenwandung 7 in drei nicht beanspruchten Ausführungsformen dargestellt.

In Fig. 2 ist die Bodenwandung 7 unterhalb des Kältemittelverdampfers 5 einheitlich von links nach rechts geneigt. Zwischen einem höher liegenden Abschnitt 12 der Bodenwandung 7 und einem tiefer liegenden Abschnitt 13 der Bodenwandung 7 ist mittig zwischen der minimalen Höhe 9 und der maximalen Höhe 10 der Bodenwandung 7 die Trennfuge 4 angeordnet. Das sich auf der Bodenwandung 7 sammelnde Kondenswasser fließt entsprechend dem Gefälle der Bodenwandung 7 zur vertikalen Ablauföffnung 8 und strömt durch die Ablauföffnung 8 aus dem Gehäuse 1. Die Ablauföffnung 8 kann auch horizontal ausgeführt sein (nicht dargestellt). Die Trennfuge 4 zwischen dem linken und rechten Gehäuseteil 2, 3 wird somit nicht mit stehendem Kondenswasser, sondern nur mit Schwellwasser beaufschlagt, weil das Kondenswasser an der Trennfuge 4 lediglich nach unten abfließt. Gesonderte Dichtmittel, z. B. eine elastische Dichtung, sind deshalb zum Abdichten der Trennfuge 4 nicht erforderlich.

In Fig. 3 ist die Bodenwandung 7 als ein Dachprofil ausgebildet. Der Bereich mit einer maximalen Höhe 10 ist mittig zwischen zwei Bereichen mit einer minimalen Höhe 9 der Bodenwandung 7 ausgebildet. Das Kondenswasser strömt durch zwei horizontale Ablauföffnungen 8 aus dem Gehäuse 1, die am Bereich mit der minimalen Höhe 9 der Bodenwandung 7 ausgeführt sind. Die Ablauföffnungen 8 können auch vertikal ausgebildet sein (nicht dargestellt). Die Trennfuge 4 befindet sich an dem Bereich mit der maximalen Höhe 10 der Bodenwandung 7, so dass an der Trennfuge 4 kein stehendes Wasser, sondern nur Schwellwasser auftritt.

In einer dritten nicht beanspruchten Ausführungsform ist in Fig. 4 die Bodenwandung 7 in vier Abschnitte 25, 26, 27, 28 unterteilt. Die beiden inneren Abschnitte 25, 26 sind als Dachprofil ausgebildet an denen sich jeweils ein weiterer Abschnitt 27, 28 der Bodenwandung 7 mit einer einheitlichen Neigung anschließt. Die Trennfuge 4 befindet sich an der maximalen Höhe 10 der Bodenwandung 7 zwischen den beiden inneren Abschnitten 25, 26 der Bodenwandung 7. Die beiden vertikalen Ablauföffnungen 8 sind jeweils zwischen dem äußeren Abschnitt 27, 28 und einem daran anschließenden inneren Abschnitt 25, 26 angeordnet. Die Ablauföffnungen 8 können auch horizontal ausgebildet sein (nicht dargestellt). Damit tritt an der Trennfuge 4 nur Schwellwasser und kein stehendes Wasser auf.

In den in den Fig. 2 bis 4 dargestellten nicht beanspruchten Ausführungsformen verfügt die Bodenwandung 7 senkrecht zur Zeicheneben über ein Gefälle, damit das Kondenswasser zu den senkrecht zur Zeichenebene nur lokal angeordneten Ablauföffnungen 8 fließen kann.

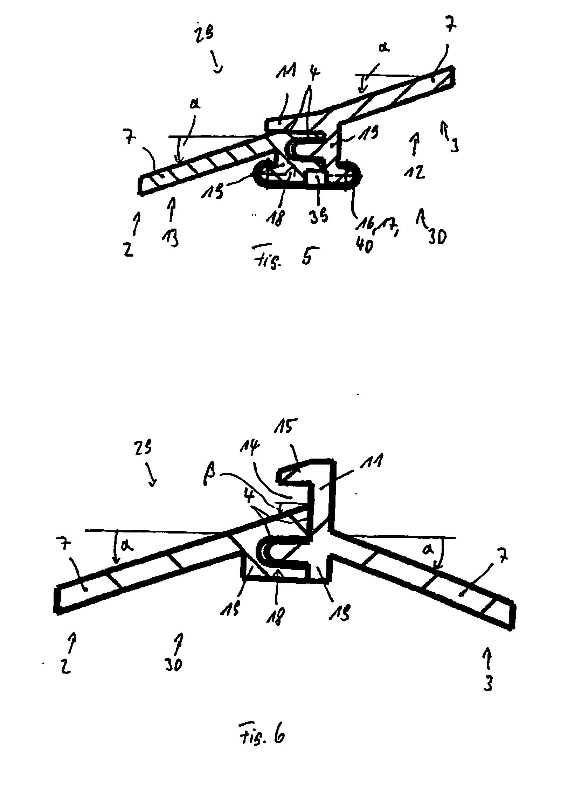

Die Fig. 5 bis 11 zeigen im Detail die nicht beanspruchten Ausbildung der Trennfuge 4 als Nut- und Federverbindung 18.

Fig. 5 zeigt die Trennfuge 4 für die Bodenwandung 7 gemäß Fig. 2. Oberhalb der Nut- und Federverbindung 18 ist eine Dichtrippe 11 vorhanden, welche einstückig an dem höher liegenden Abschnitt 12 der Bodenwandung 7 hergestellt ist und die Trennfuge 4 überdeckt. Die Dichtrippe 11 liegt auf dem tiefer liegenden Abschnitt 13 der Bodenwandung 7 auf. Das Kondenswasser fließt an der Oberseite 29 der Bodenwandung 7 vom höher liegenden Abschnitt 12 der Bodenwandung 7 über die Dichtrippe 11 zum tiefer liegenden Abschnitt 13 der Bodenwandung 7. Damit kann Schwallwasser, wenn überhaupt, nur temporär in die Trennfuge 4 eindringen. An der Unterseite 30 der Bodenwandung 7 ist an jedem Gehäuseteil 2, 3 eine Dichtlippe 19 vorhanden. Die Dichtlippen 19 werden teilweise von der Nut- und Federverbindung 18 gebildet und sind von einem optionalen Schrumpfschlauch 16 oder einer optionalen Schrumpffolie 17 umschlossen. Der Schrumpfschlauch 16 oder die Schrumpffolie 17 dienen zum ergänzenden Abdichten der Trennfuge 4.

Zusätzlich können an den beiden Dichtlippen 19 mechanische Fixiermittel, z. B. Klemmen (nicht dargestellt), positioniert sein, welche die beiden Gehäuseteile 2, 3 zusammendrücken und darüber hinaus den Schrumpfschlauch 16 oder die Schrumpffolie 17 befestigen. Der Neigungswinkel α der Bodenwandung 7 ist größer als 17°. Anstelle des Schrumpfschlauches 16 oder der Schrumpffolie 17 kann ein, vorzugsweise elastisches, Klemmprofil 40 über die beiden Dichtlippen 19 geschoben werden. Das im Querschnitt ungefähr C-förmige Klemmprofil 40 ist vollständig und nicht nur punktuell entlang der Dichtlippen 19 angeordnet, so dass sich in einer Notablaufrinne 39 Kondenswasser sammeln kann, welches durch die Nut- und Federverbindung 18 durchgedrungen ist. Dieses in der Notablaufrinne 39 gesammelte Wasser wird zu einem Kondenswasserablauf (nicht dargestellt) geleitet, so dass das Kondenswasser keinen Schaden anrichten kann. Das Klemmprofil 40 drückt die beiden Gehäuseteile 2, 3 zusammen und dichtet ergänzend ab. Die Geometrie des Klemmprofiles 40 ist dahingehend bemessen, dass aufgrund einer elastischen Verformung beide Gehäuseteile 2, 3 zusammengedrückt werden.

Die Fig. 6 bis 11 zeigen die nicht beanspruchten Trennfuge 4 für die Bodenwandung 7 gemäß Fig. 3 und 4.

In einer zweiten nicht beanspruchten Ausführungsform der Trennfuge 4 ist die zum Gehäuseteil 3 gehörenden Bodenwandung 7 mit einer Dichtrippe 11 versehen (Fig. 6). Ein Ende der Dichtrippe 11 verfügt über eine Tropfnase 15, so dass von oben aus dem Kältemittelverdampfer 4 auf die Trennfuge 4 herabfallende Kondenswassertropfen nicht unmittelbar auf der Trennfuge 4 auftreffen können und Kondenswassertropfen kontrolliert in einem Abstand von der Trennfuge 4 auf der Oberseite 29 der zum linken Gehäuseteil 2 gehörenden Bodenwandung 7 fallen. Zwischen der Dichtrippe 11 mit Tropfnase 15 und der zum linken Gehäuseteil 2 gehörenden Bodenwandung 7 bildet sich somit ein Hohlraum 14. Der Neigungswinkel β der zum linken Gehäuseteil 2 gehörenden Bodenwandung 7 an der Trennfuge 4 unterhalb der Tropfnase 15 soll mehr als 0° betragen, d. h. die Bodenwandung 7 unterhalb der Tropfnase 15 soll eine abfallende Neigung weg von der Trennfuge 4 aufweisen, damit das Kondenswasser auf der Bodenwandung 7 unterhalb der Tropfnase 15 von der Trennfuge 4 abfließt. Die Neigung der Bodenwandung 7 auf beiden Seiten der Trennfuge 4 soll größer als 17° sein, damit das Kondenswasser auch bei einer Schrägstellung des Kraftfahrzeuges, z. B. bei Steigungsstrecken, abfließen kann. Der Neigungswinkel β ist in Fig. 6 gleich dem Neigungswinkel α.

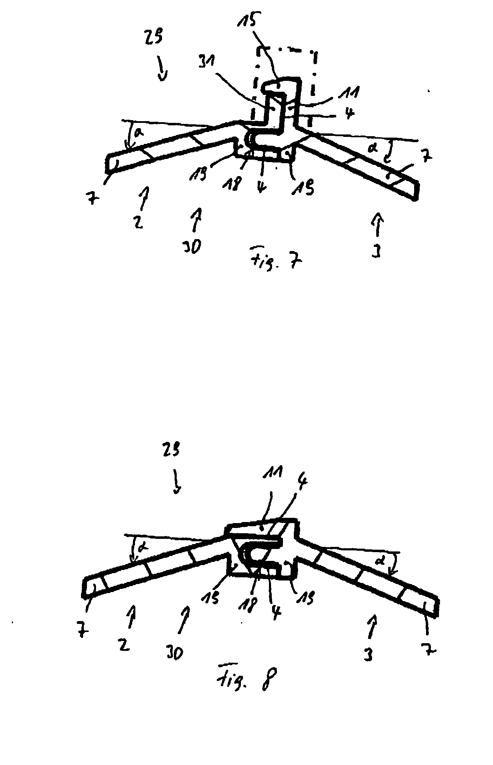

Die dritte nicht beanspruchten Ausführungsform (Fig. 7) der Trennfuge 4 unterscheidet sich von der zweiten Ausführungsform (Fig. 6) durch eine zusätzliche Dichtrippe 31, welche den Hohlraum 14 zwischen der Dichtrippe 11 und der zum linken Gehäuseteil 2 gehörenden Bodenwandung 7 ausfüllt. Dadurch kann optional die Dichtrippe 11 und die zusätzliche Dichtrippe 31 von einem Schrumpfschlauch 16 oder einer Schrumpffolie 17 zum Abdichten der Trennfuge umschlossen werden. Der Schrumpfschlauch 16 oder die Schrumpffolie 17 ist in Fig. 7 strichpunktiert im ungeschrumpften Zustand dargestellt.

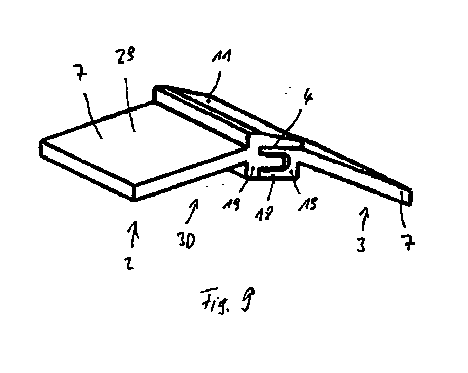

Die vierte nicht beanspruchten Ausführungsform (Fig. 8, 9) der Trennfuge 4 unterscheidet sich von der ersten Ausführungsform (Fig. 5) dadurch, dass die zum rechten Gehäuseteil 3 gehörende Bodenwandung 7 nicht zur Trennfuge 4, sondern von der Trennfuge 4 weg geneigt ist, d. h. ein Dachprofil vorliegt. Das auf der Dichtrippe 11 auftreffende Kondenswasser fließt auf der Bodenwandung 7, welche dem linken Gehäuseteil 2 zuzuordnen ist, als auch auf der Bodenwandung 7, die vom rechten Gehäuseteil 3 gebildet wird, in entgegengesetzter Richtung.

In den nicht beanspruchten Ausführungsformen zwei bis vier der Trennfuge 4 gemäß Fig. 6 bis 9 können, analog zur ersten Ausführungsform, optional die beiden Dichtlippen 19 an der Unterseite 30 der Bodenwandung 7 von dem Schrumpfschlauch 16 oder der Schrumpffolie 17 oder dem Klemmprofil 40 umschlossen sein und vorzugsweise eine Notablaufrinne 39 ausgebildet sein. Sofern in einer oder beiden Dichtlippen 19 keine Ausnehmung als Notablaufrinne 39 ausgebildet ist, kann die Notablaufrinne 39 auch von einem länglichen Hohlraum zwischen den Dichtlippen 19 und dem Klemmprofil 40 gebildet werden, indem das Klemmprofil 40 in wenigstens einem Teilbereich einen Abstand zu den beiden Dichtlippen 19 aufweist (nicht dargestellt).

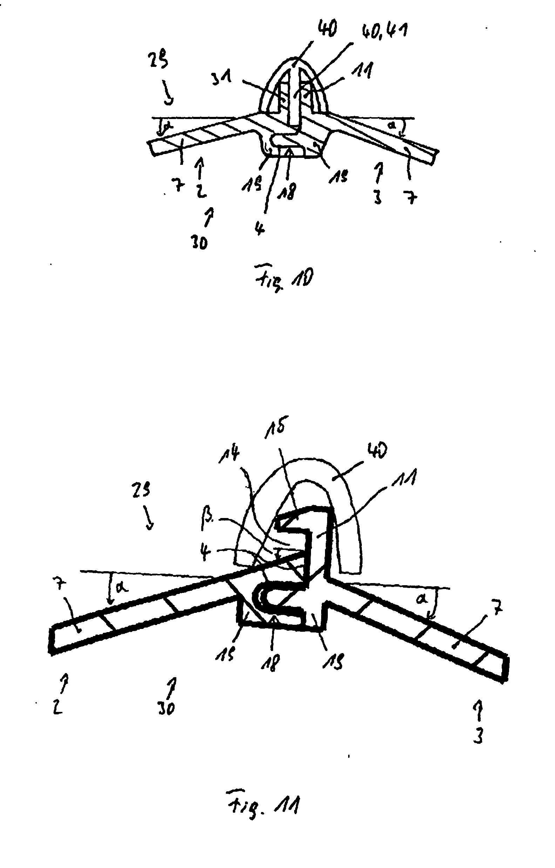

Fig. 10 zeigt einen Querschnitt der Trennfuge 4 in einer fünften nicht beanspruchten Ausführungsform für die Bodenwandung 7. Die Trennfuge 4 wird untenseitig von der Nut- und Federverbindung 18 mit zwei Dichtlippen 19 gebildet. Oberseitig sind die Dichtrippe 11 und die zusätzliche Dichtrippe 31 parallel zueinander mit einem Abstand zueinander ausgebildet, so dass sich ein Spalt 41 bildet. In dem Spalt 41 und außenseitig an der Dichtrippe 11 und der Zusatzdichtrippe 31 ist ein elastisches Klemmprofil 40 aus Kunststoff angeordnet, das die Dichtrippe 11 und die zusätzliche Dichtrippe 31 umgreifen. Das Klemmprofil 40 ersetzt z. B. die Klammer an den beiden Dichtlippen 19 und drückt die beiden Gehäuseteile 2, 3 an der Trennfuge 4 zusammen, da das Klemmprofil 40 die Dichtrippe 11 und die zusätzliche Dichtrippe 31 umgreifen und dabei eine Druckkraft aufgrund einer elastischen Verformung des Klemmproflles 40 auf die Dichtrippe 11 und die zusätzliche Dichtrippe 31 aufbringen. Dabei ist der Teil des Klemmprofiles 40, der in dem Spalt 41 angeordnet ist, geringfügig größer als der Spalt 41, sofern das linke und rechte Gehäuseteil 2, 3 zusammengedrückt werden und kein Klemmprofil 40 vorhanden ist. Dadurch wird bei der Anordnung gemäß Fig. 10 der in dem Spalt 41 angeordnete Teil des Klemmprofiles 40 von der Dichtrippe 11 und der zusätzlichen Dichtrippe 31 unter Druckkraft eingeklemmt und aufgrund der elastischen Eigenschaften des Klemmprofiles 40 verformt. Damit dichtet das Klemmprofil 40 die Trennfuge 4 im Bereich des Spaltes 41 ab. Außerdem hält der außenseitig an der Dichtrippe 11 und der zusätzlichen Dichtrippe 31 angeordnete Teil des Klemmprofiles 40 von der Trennfuge 4 Kondenswasser fern. In der fünften nicht beanspruchten Ausführungsform gemäß Fig. 10 kann auf die Nut- und Federverbindung 18 auch verzichtet werden (nicht dargestellt).

Eine nicht dargestellte nicht beanspruchten Ausführungsform unterscheidet sich von der fünften Ausführungsform gemäß Fig. 10 dadurch, dass zwischen der Dichtrippe 11 und der zusätzlichen Dichtrippe 31 das Klemmprofil 40 nicht angeordnet ist und die Dichtrippe 11 und die zusätzliche Dichtrippe 31 ohne Spalt 41 unmittelbar aufeinander liegen an der vertikalen Trennfuge 4. Das Klemmprofil 40 ist im Querschnitt C-förmig und drückt die Dichtrippe 11 gegen die zusätzliche Dichtrippe 31.

In Fig. 11 ist in einer sechsten nicht beanspruchten Ausführungsform eine Ergänzung der zweiten Ausführungsform gemäß Fig. 6 dargestellt. Auf die Dichtrippe 11 ist das im Querschnitt C-förmige Klemmprofil 40 aufgestülpt, so dass Kondenswasser von der Trennfuge 4 zwischen dem linken und rechten Gehäuseteil 2, 3 ferngehalten wird.

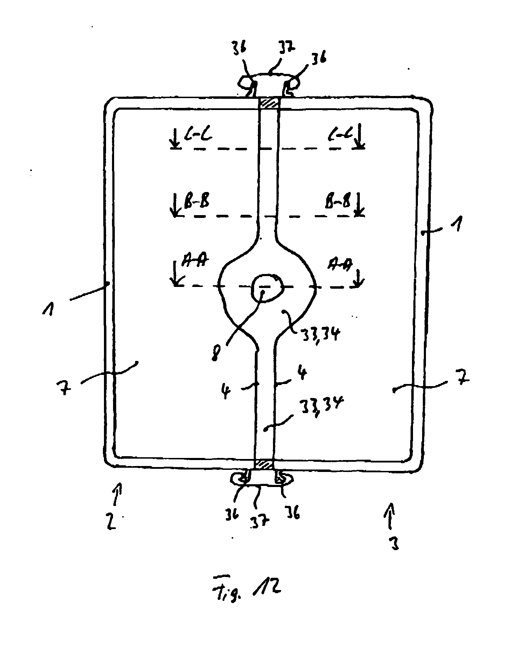

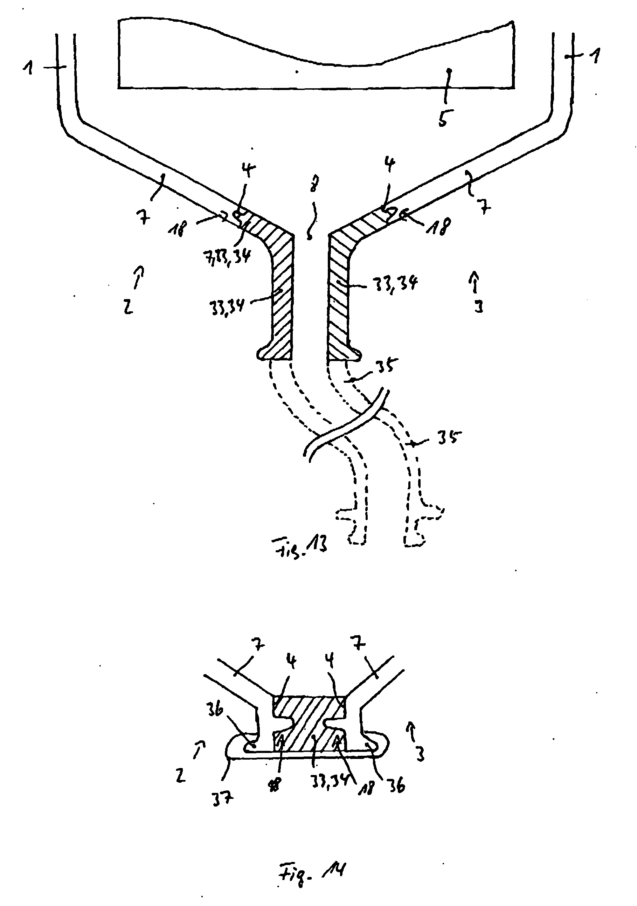

In den Fig. 12 bis 16 ist das Ausführungsbeispiel der Erfindung dargestellt. Fig. 12 zeigt einen horizontalen Schnitt durch das Gehäuse 1 und eine Draufsicht auf die Bodenwandung 7. Die Bodenwandung 7 wird von dem linken und rechten Gehäuseteil 2, 3 gebildet. Die Trennfuge 4 zwischen dem linken und rechten Gehäuseteil 2, 3 ist mittels eines elastischen Dichtelements 34 als Dichtmittel 33 abgedichtet (Fig. 12 bis 16). Die Ablauföffnung 8 wird von dem elastischen Dichtelement 34 gebildet (Fig. 12, 13) Optional kann an der von dem elastischen Dichtelement 34 gebildeten Ablauföffnung 8 auch ein Ablaufschlauch 35 als, vorzugsweise einteiliger, Bestandteil des Dichtelements 34 integriert sein, welcher in Fig. 11 strichliert dargestellt ist. Im Bereich der Ablauföffnung 8 und bis zu einem bestimmten Abstand von der Ablauföffnung 8 sind die beiden Gehäuseteile 2, 3 an der Bodenwandung 7 an beiden Trennfugen 4 ausschließlich mit dem elastischen Dichtelement 34 verbunden, d. h. es tritt kein unmittelbarer Kontakt zwischen der Bodenwandung 7 der beiden Gehäuseteile 2, 3 auf (Fig. 13, 14). Die Bodenwandung 7 der jeweiligen Gehäuseteile 2, 3 ist mittelbar durch das elastische Dichtelement 34 verbunden. Es treten zwei Trennfugen 4 auf, die jeweils von einer Nut- und Federverbindungen 18 gebildet sind. Das elastische Dichtelement 34 bildet auch einen Teil der Bodenwandung 7. An der Bodenwandung 7 sind im Bereich der Trennfuge 4 Rasthacken 36 ausgebildet, welche von einer Klemme 37 umschlossen sind (Fig. 12, 14). Die Klemme 37 übt auf das elastische Dichtelement 34 eine Druckkraft auf, so dass das elastische Dichtelement 34 zuverlässig und sicher abdichtet. Ergänzend kann an den Rasthacken 36 auch ein Schrumpfschlauch 16 oder eine Schrumpffolie 17 angebracht sein (nicht dargestellt).

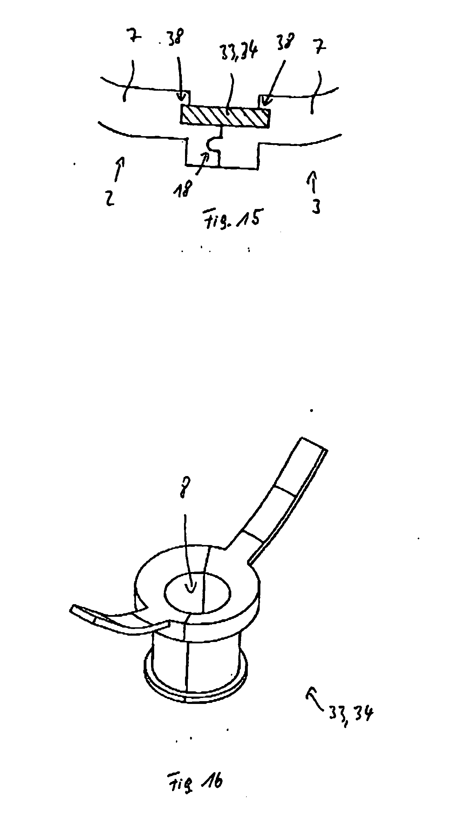

Ab einem bestimmten Abstand der Trennfuge 4 von der Ablauföffnung 8 ist diese gemäß Fig. 15 ausgebildet. Eine Nut- und Federverbindung 18 verbindet unmittelbar die zum linken Gehäuseteil 2 gehörenden Bodenwandung 7 und die vom rechten Gehäuseteil 3 gebildete Bodenwandung 7. Das elastische Dichtelement 34 ist in zwei von der Bodenwandung 7 gebildeten Aussparungen 38 oberhalb der Nut- und Federverbindung 18 eingefügt. Dabei wird auf das elastische Dichtelement 34 eine Druckkraft ausgeübt, weil das Dichtelement 34 bezüglich der Aussparungen 38 ein Übermaß aufweist. Die Nut- und Federverbindung 18 an der Bodenwandung 7 gemäß Fig. 15 ist notwendig, weil die Verbindung gemäß Fig. 14 über eine geringere mechanische Stabilität verfügt. In Fig. 16 ist eine perspektivische Ansicht des elastischen Dichtelements 34 dargestellt. Die an dem mechanischen Dichtelement 34 vorhandene Nut- und Federverbindung 18 gemäß Fig. 13 und 14 ist in Fig. 14 nicht dargestellt.

### Bezugszeichenliste

- 1: Gehäuse
- 2: Linkes Gehäuseteil
- 3: Rechtes Gehäuseteil
- 4: Trennfuge
- 5: Kältemitteiverdampfer
- 6: Heizeinrichtung
- 7: Bodenwandung
- 8: Ablauföffnung
- 9: Minimale Höhe der Bodenwandung
- 10: Maximale Höhe der Bodenwandung
- 11: Dichtrippe
- 12: Höher liegender Abschnitt der Bodenwandung
- 13: Tiefer liegender Abschnitt der Bodenwandung
- 14: Hohlraum
- 15: Tropfnase
- 16: Schrumpfschlauch
- 17: Schrumpffolie
- 18: Nut- und Federverbindung
- 19: Dichtlippe
- 20: Filter
- 21: Prallwand
- 22: Elektrische Nachheizung
- 23: Gebläse
- 24: Austrittsöffnung
- 25: Innerer Abschnitt der Bodenwandung
- 26: Innerer Abschnitt der Bodenwandung
- 27: Äußerer Abschnitt der Bodenwandung
- 28: Äußerer Abschnitt der Bodenwandung
- 29: Oberseite der Bodenwandung
- 30: Unterseite der Bodenwandung
- 31: Zusätzliche Dichtrippe
- 32: Anschlussstutzen
- 33: Dichtmittel
- 34: Dichtelement
- 35: Ablaufschlauch
- 36: Rasthacken
- 37: Klemme
- 38: Aussparung
- 39: Notablaufrinne
- 40: Klemmprofil
- 41: Spalt

## Patentansprüche

1. Klimaanlage für ein Kraftfahrzeug, umfassend
- ein von einem linken und rechten Gehäuseteil (2, 3) wenigstens teilweise gebildetes Gehäuse (1) zur Aufnahme eines Kältemittelverdampfers (5), wobei zwischen dem linken und rechten Gehäuseteil (2, 3) wenigstens eine Trennfuge (4) auftritt,
- ein Dichtmittel (33) zum Abdichten der wenigstens einen Trennfuge (4),
- einen im Gehäuse (1) angeordneten Kältemittelverdampfer (5),
- eine von dem Gehäuse (1) gebildete Bodenwandung (7) zum Sammeln des am Kältemittelverdampfer (5) sich bildenden Kondenswassers und
- wenigstens eine in der Bodenwandung (7) angeordnete Ablauföffnung (8) zum Abführen des am Kältemittelverdampfer (5) gebildeten Kondenswassers, wobei
die vom linken und rechten Gehäuseteil (2, 3) gebildete Bodenwandung (7) mittels dem Dichtmittel (33) an der wenigstens einen Trennfuge (4) ausschließlich mittelbar miteinander verbunden ist,
**dadurch gekennzeichnet, dass**
das Dichtmittel (33) die Ablauföffnung (8) bildet.

2. Klimaanlage nach einem oder mehreren der vorhergehenden Ansprüche,
**dadurch gekennzeichnet, dass**
die wenigstens eine Trennfuge (4) von einer Nut- und Federverbindung (18) gebildet ist.

3. Klimaanlage nach einem oder mehreren der vorhergehenden Ansprüche,
**dadurch gekennzeichnet, dass**
im Gehäuse (1) eine Heizeinrichtung (6) und/oder ein Filter (20) und/oder eine elektrische Nachheizung (22) und/oder eine Prallwand (21) und/oder wenigstens eine Luftklappe und/oder ein Gebläse (23) angeordnet ist.

## Claims

1. Air conditioning unit for a motor vehicle, comprising
- a housing (1), which is formed at least in part by a left and a right housing part (2, 3), for receiving a refrigerant evaporator (5), wherein at least one joint (4) is present between the left and right housing parts (2, 3),
- a sealant (33) for sealing the at least one joint (4),
- a refrigerant evaporator (5) disposed in the housing (1),
- a bottom wall (7) formed by the housing (1) for collecting the condensation water forming at the refrigerant evaporator (5), and
- at least one drainage opening (8) disposed in the bottom wall (7) for discharging the condensation water formed at the refrigerant evaporator (5),
wherein
the bottom wall (7) formed by the left and right housing parts (2, 3) is exclusively indirectly connected at the at least one joint (4) by way of a sealing means (33),
wherein the sealing means (33) forms the drainage opening (8).

2. An air conditioning unit according to one or more of the preceding claims, **characterized in that** the at least one joint (4) is formed by a tongue-and-groove connection (18).

3. An air conditioning unit according to one or more of the preceding claims, **characterized in that** a heating device (6) and/or a filter (20) and/or an electric auxiliary heater (22) and/or a deflector (21) and/or at least one air flap and/or a fan (23) are disposed in the housing (1).

## Revendications

1. Système de climatisation pour un véhicule automobile, comprenant :
- un carter (1) formé au moins partiellement par une partie de carter gauche et droite (2, 3) et servant au logement d'un évaporateur de fluide frigorigène (5), où au moins un joint de séparation (4) est présent entre la partie de carter gauche et droite (2, 3),
- un moyen d'étanchéité (33) assurant l'étanchéité du joint de séparation (4) au moins au nombre de un,
- un évaporateur de fluide frigorigène (5) disposé dans le carter (1),
- une paroi de fond (7) formée par le carter (1) et servant à collecter l'eau de condensation se formant sur l'évaporateur de fluide frigorigène (5), et
- au moins une ouverture d'écoulement (8) disposée dans la paroi de fond (7) et servant à évacuer l'eau de condensation formée sur l'évaporateur de fluide frigorigène (5),
où les parties de carter gauche et droite (2, 3), qui forment la paroi de fond (7), sont reliées l'une à l'autre, de façon indirecte, exclusivement par le moyen d'étanchéité (33) placé au niveau du joint de séparation (4) au moins au nombre de un,
**caractérisé en ce que** le moyen d'étanchéité (33) forme l'ouverture d'écoulement (8).

2. Système de climatisation selon la revendication 1, **caractérisé en ce que** le joint de séparation (4) au moins au nombre de un est formé par un emboîtement mâle / femelle (18).

3. Système de climatisation selon l'une ou l'autre des revendications précédentes, **caractérisé en ce qu'**un dispositif de chauffage (6) et / ou un filtre (20) et / ou un dispositif de chauffage électrique auxiliaire (22) et / ou une paroi déflectrice (21) et / ou au moins un volet d'air et / ou une soufflante (23) est disposé(e) dans le carter (1).
